(19) Europäisches Patentamt
European Patent Office
Office européen des brevets

(11) EP 4 656 677 A1

(12) EUROPEAN PATENT APPLICATION

(43) Date of publication:
**03.12.2025 Bulletin 2025/49**

(21) Application number: **24178133.5**

(22) Date of filing: **27.05.2024**

(51) International Patent Classification (IPC):
***C08K 5/5435*** *(2006.01)* ***C08L 95/00*** *(2006.01)*
***C07F 7/18*** *(2006.01)*

(52) Cooperative Patent Classification (CPC):
(C-Sets available)
**C07F 7/1804** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Mapei S.p.A.**
**20158 Milano (IT)**

(72) Inventors:
- **DEL ZOPPO, Gilberto**
  **20158 MILANO (IT)**
- **FERRARI, Giorgio**
  **20158 MILANO (IT)**
- **SQUINZI, Marco**
  **20158 MILANO (IT)**

(74) Representative: **Bianchetti & Minoja with Trevisan & Cuonzo IPS SRL**
**Via Plinio, 63**
**20129 Milano (IT)**

# (54) ORGANO-SILANE ANTISTRIPPING AGENTS FOR ASPHALT CONGLOMERATES

(57) The invention discloses the use of epoxy-silane compounds as anti-stripping agents for asphalt compositions with improved UV resistance, water-proofing ability and adhesion between the aggregates and the asphalt matrix.

EP 4 656 677 A1

(52) Cooperative Patent Classification (CPC): (Cont.)

C-Sets
**C08K 5/5435, C08L 95/00**

## Description

### Field of invention

The object of the present invention is the use of epoxy-silane compounds as anti-stripping agents for asphalt compositions with improved UV resistance, water-proofing ability and adhesion between the aggregates and the asphalt matrix.

### Background of the invention

Asphalt is one of the most used binders in industrial paving of motorways and airport lanes thanks to its large availability, low cost and versatility coupled with its outstanding performance in terms of durability and mechanical properties. Nevertheless, the aggregates used in the asphalt conglomerates more and more are selected among basalt, porphyry, and granite materials, all of them characterized by a poor affinity with bituminous binders. This is the main reason for the early deterioration of the conglomerates due to the detachment of the bitumen phase from the aggregates, as a consequence of aging, mechanical stress and whether conditions.

In order to prevent such phenomena, starting from decades ago surfactants based on different chemical families comprising fatty amides and amines, organosilanes, phosphoric esters and quaternary ammonium salts were introduced as adhesion promoters and wetting agents.

Some of them were recognized to be suitable with some aggregates but poorly effective with other ones. Moreover, some of those compounds, particularly those containing nitrogen in their moiety, revealed thermally unstable, with the consequence they lose large part of their properties in a short period of time.

Organo-silanes were largely employed in the past, as described in US 2,985,678, US 5,130,354, US 4,170,484 and US 4,038,096.

More recently, cationic salts of organosilane compounds were introduced to prevent the thermal degradation during the storage of hot asphalt conglomerate and to improve the wettability, as described in US 8,771,413B2.

One drawback of the previous anti-stripping agents is their poor resistance to UV oxidation, which causes premature loss of the rheological characteristics of bitumen.

### Description of the invention

The present invention discloses the use of epoxy-alkoxy silanes as both anti-stripping and water-proofing agents for bitumen. Furthermore, we have surprisingly found that they also prevent the UV oxidation of asphalt compositions, even when used at very low dosage.

The epoxy-silanes for use according to the invention have the following formula:

(1)

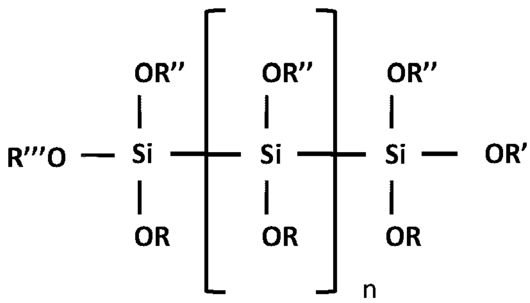

where:

R is a 3-gycidyl-oxypropyl group;
R', R" and R‴, which are the same or different, represent a C1-C6 alkoxy group, preferably methoxy, ethoxy, propoxy groups;
n is an integer from 1 to 4.

In a first embodiment, the invention provides an anti-stripping agent for bitumen compositions comprising one or more epoxysilanes of formula (1).

Preferably, epoxy-alkoxy-silanes both in monomeric and oligomeric form are used. In a more preferred embodiment, 3-glycidyl-oxypropyl-trimethoxy-silane and its oligomers are used.

A second embodiment of the invention concerns the use of the epoxysilanes of formula (1) as antistripping agents in bitumen/asphalt compositions for road, airports, dams, micro-surfaces and similar engineering or building applications.

The invention also refers to a method for enhancing the adhesion of bitumen or polymer modified bitumen to gravel, with improved hydrophobic effect and UV resistance which comprises the addition to the bitumen of the anti-stripping agent of the invention.

According to the use and method of the invention, the dosage for the effective application of the anti-stripping agent is much lower compared to other classes of anti-stripping agents for asphalt. Different from the other anti-stripping agents which are typically used in the range from 0.4 to 1.5 % by weight of bitumen, the dosage of the anti-stripping agent of the invention is in the range from 0.01 to 0.5 by weight of bitumen, preferably from 0.05 to 0.15 % by weight of bitumen.

A bitumen composition comprising 0.01 to 0.5%, preferably from 0.05 to 0.15 % by weight of bitumen of an epoxysilane of formula (1) is a further embodiment of the invention.

Further characteristics of the invention are described in more detail in the following examples.

**Example 1**

In this example the advantages of the antistripping agent of the invention in improving the water resistance of asphalt compositions are demonstrated by the Indirect Tensile Strength Ratio (ITSR) test. This test, which is described in the European Norm EN 12697-12:2003, consists in measuring the loss of indirect tensile strength of a set of specimens of an asphalt mix conditioned in water at 40 °C for 72 hours in comparison to a set of the same asphalt mix kept dry at room temperature. The ratio of the indirect tensile strength of the water conditioned samples compared to that of equivalent dry samples conditioned at room temperature is a measure of the water sensitivity of bitumen compositions and it is expressed in percent (ITSR %).

A polymer modified bitumen mixture with maximum aggregate size of 22 mm was prepared with 0.13 % of monomeric 3-glycidyl-oxypropyl-trimethoxy-silane by weight of bitumen. A Performance Grade polymer modified bitumen PG 76 according to ASTM D6373-21 was used. Six equivalent cylindrical specimens were prepared with diameter of 100 mm. Three of these specimens were stored in dry conditions at the laboratory temperature of 20 °C. The other three specimens were immersed in water and vacuum was applied to a residual pressure of 6.7 kPa for 30 minutes to allow water to penetrate all the porosity of the specimens. After that, the specimens were transferred into a water bath at 40 °C and left for 72 hours. This time elapsed, the samples were externally dried and indirect tensile strength was measured with a compression testing machine mod. Uniframe 50KN by Controls. The average values were calculated for the 2 sets of specimens (wet and dry) and the ITSR % was calculated according to the following formula:

$$ITSR = 100 \times \frac{ITSw}{ITSd}$$

where:

*ITSR* is the indirect tensile strength ratio, in percent (%);
*ITSw* is the average indirect tensile strength of the wet group, expressed in kilopascal
(kPa); *ITSd* is the average indirect tensile strength of the dry group, expressed in kilopascal (kPa).
The results are summarized in Table 1.

**Table 1. Indirect Tensile Strength Ratio of polymer modified bitumen mixture with 0.13 % by weight of the antistripping agent of the invention.**

| Sample With 0.13 % antistripping agent of the present invention | Average diameter (mm) | Average thickness (mm) | ITS (kPa) |
|---|---|---|---|
| Specimen 1 wet | 150 | 114 | 254.6 |
| Specimen 2 wet | 150 | 115 | 231.0 |
| Specimen 3 wet | 150 | 113 | 227.2 |
| Average wet | | | 237.6 |
| Specimen 4 dry | 150 | 113 | 277.2 |
| Specimen 5 dry | 150 | 113 | 283.2 |

(continued)

| Sample With 0.13 % antistripping agent of the present invention | Average diameter (mm) | Average thickness (mm) | ITS (kPa) |
|---|---|---|---|
| Specimen 6 dry | 150 | 114 | 255.4 |
| Average dry | | | 271.9 |
| **ITSR (%)** | | | **87.4 %** |

Similar specimens were prepared without the antistripping agent of the invention as reference and tested under the same procedure. Results are shown in Table 2.

**Table 2. Indirect Tensile Strength Ratio of the same polymer modified bitumen mixture without the antistripping agent of the invention (reference).**

| Sample without the antistripping agent of the invention (Reference) | Average diameter (mm) | Average thickness (mm) | ITS (kPa) |
|---|---|---|---|
| Specimen 1 wet | 150 | 113 | 162.6 |
| Specimen 2 wet | 150 | 114 | 170.4 |
| Specimen 3 wet | 150 | 113 | 167.2 |
| Average wet | | | 166.7 |
| Specimen 4 dry | 150 | 115 | 281.1 |
| Specimen 5 dry | 150 | 113 | 273.2 |
| Specimen 6 dry | 150 | 113 | 257.6 |
| Average dry | | | 270,6 |
| **ITSR (%)** | | | **61.6 %** |

The results of the tests of Table 1 and Table 2 confirm that the antistripping agent of the invention is highly effective in improving the resistance to water of asphalt conglomerates.

**Example 2**

200 grams of the residual silica aggregates from the specimens 4 of Table 1 and Table 2, both dry-conditioned, the first without antistripping agent, used as a reference, and the second with 0.13 % on bitumen of the anti-stripping agent of the invention, were separately boiled in 600 grams of distilled water for 10 minutes, according to EN 12697-11 and the resulting aggregates were visually compared after drying, as shown in Figure 1. The pile on the left of Figure 1 is representative of the specimen 4 without the antistripping agent of the invention (Sample 1) and the pile on the right is representative of the specimen 4 with 0.13 % by weight of the antistripping agent of the invention (Sample 2). By visual comparison of the two piles, it is quite evident that a higher fraction of bitumen remained attached to the aggregates to Sample 2 (100% of coverage) compared to Sample 1 (35% of coverage), confirming the beneficial effect of the antistripping agent of the invention in promoting the adhesion between the bitumen and the aggregates.

**Example 3**

In this example the effect of the antistripping agent of the invention in improving the UV resistance of bitumen is demonstrated.

62.5 ml of Performance Grade polymer modified bitumen PG 76 according to ASTM D6373-21 containing 0.1 % on bitumen of oligomeric 3-glycidyl-oxypropyl-trimethoxy-silane were homogeneously distributed over a 25 x 25 cm glass plate to form a layer 1 mm thick and then irradiated by a Hg lamp for 7 hours, simulating a 5-year solar exposure. Equivalent volume of PG 76 modified bitumen according to ASTM D6373-21 without the antistripping agent of the invention was treated in the same way and used as a reference for comparison. Both samples were characterized by rheological measurements in oscillatory regime by using a Dynamic Shear Rheometer mod. Anton Paar Physica MCR 101. Measurements were performed in the temperature range of interest from 4 °C to 86 °C. Results were plotted as Complex Shear Modulus vs Reduced Frequency curves, as shown in Figure 2. Triangle-based plot refers to the sample with 0.1 %

on bitumen of the antistripping agent of the invention and square-based plot refers to the reference sample without the antistripping agent of the invention.

The results of Figure 2 indicate that the Complex Elastic Modulus of the sample of bitumen containing 0.1 % of the antistripping agent of the invention is higher than the corresponding reference sample over the whole range of temperature, confirming that the antistripping agent of the invention prevents the UV degradation of bitumen and contributes to keep the original performances for long time.

## Claims

1. An antistripping agent for asphalt compositions comprising epoxy-alkoxy silane compounds of formula (1)

(1) 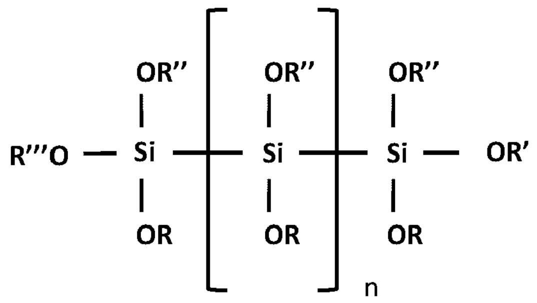

where:

R is a 3-gycidyl-oxypropyl group;
R', R" and R‴, which are the same or different, represent a C1-C6 alkoxy group,
n is an integer from 1 to 4.

2. An anti-stripping agent according to claim 1 wherein R', R" and R‴, which are the same or different, represent methoxy, ethoxy, propoxy groups.

3. The antistripping agent as claimed in claim 1 where the silane is a mono, di or tri alkoxy-silane.

4. The antistripping agent according to any one of claims 1-3, wherein the epoxy-silane compound is 3-glycidyl-oxypropyl-trimethoxy-silane monomer or its oligomeric form.

5. Use of the anti-stripping agent of claims 1-4 in asphalt mixtures for road, airports, dams, micro-surfaces and similar engineering applications.

6. A method for enhancing the adhesion of bitumen or polymer modified bitumen to gravel, with improved hydrophobic effect and UV resistance which comprises the addition to the bitumen of the anti-stripping agent of claims 1-4.

7. A method according to claim 6 wherein the dosage of the antistripping agent by the weight of bitumen is in the range from 0.01 to 0.5 per cent.

8. A method according to claim 7 wherein the dosage of the antistripping agent by the weight of bitumen is in the range from 0.05 to 0.15 per cent.

9. A bitumen composition comprising an epoxysilane of formula (1) in a range from 0.01 to 0.5%, preferably from 0.05 to 0.15 % by weight of bitumen.

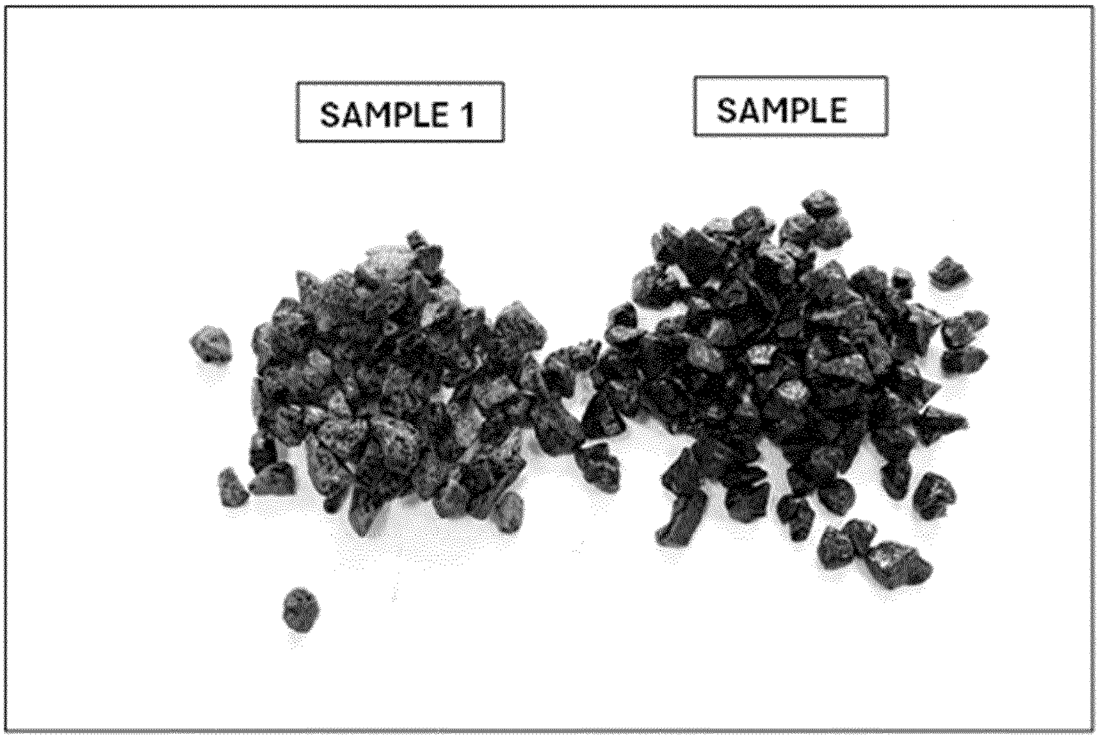


Figure 1

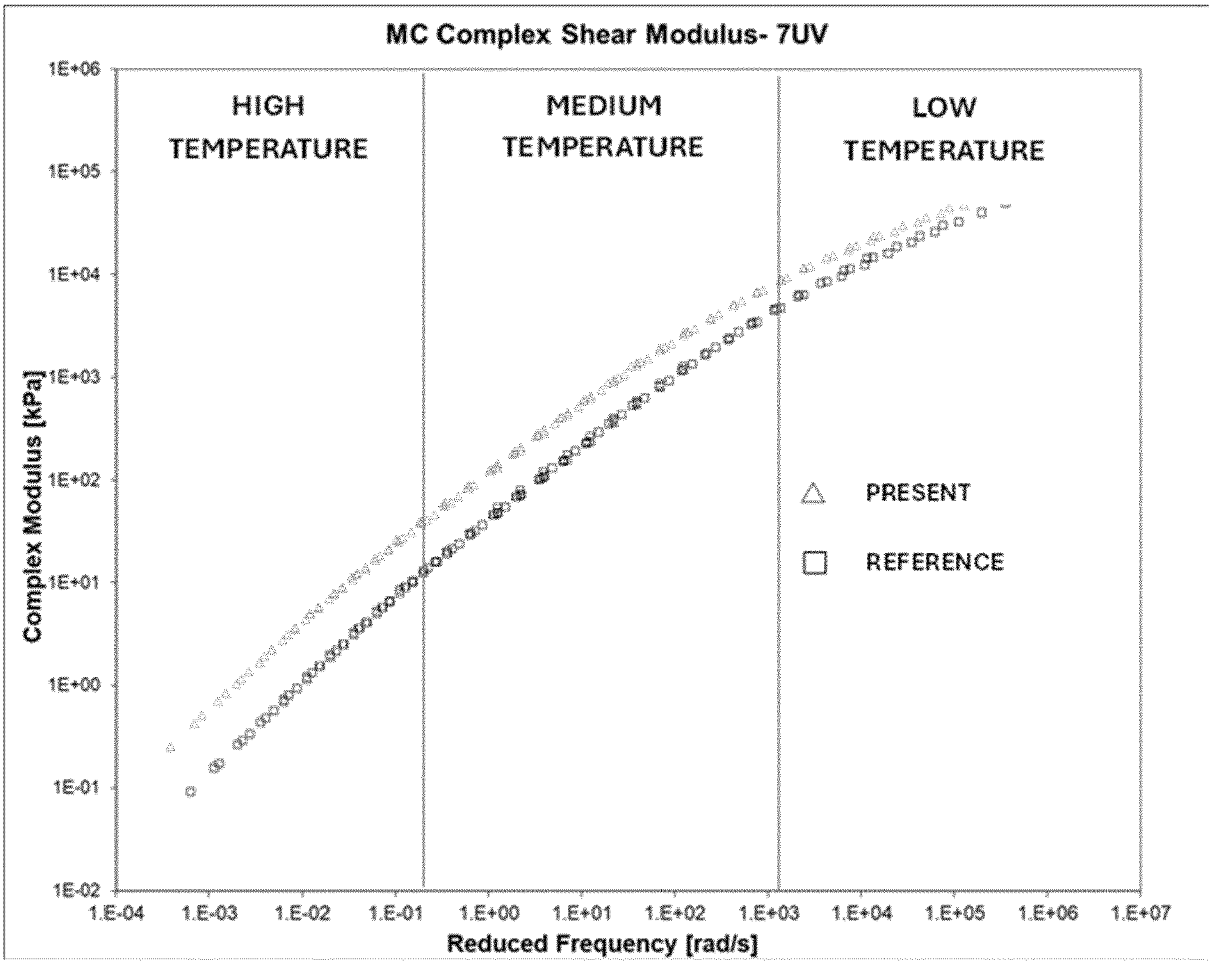
MC Complex Shear Modulus- 7UV
HIGH TEMPERATURE
MEDIUM TEMPERATURE
LOW TEMPERATURE
PRESENT
REFERENCE
Complex Modulus [kPa]
Reduced Frequency [rad/s]
1E+06
1E+05
1E+04
1E+03
1E+02
1E+01
1E+00
1E-01
1E-02
1.E-04
1.E-03
1.E-02
1.E-01
1.E+00
1.E+01
1.E+02
1.E+03
1.E+04
1.E+05
1.E+06
1.E+07

Figure 2

Europäisches Patentamt
European Patent Office
Office européen des brevets

# EUROPEAN SEARCH REPORT

Application Number
EP 24 17 8133

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | CN 114 479 486 B (CHINESE PETROCHEMICAL INDUSTRY LTD COMPANY ET AL.) 4 July 2023 (2023-07-04)<br>* claims; example 1 * | 1-5<br>6-9 | INV.<br>C08K5/5435<br>C08L95/00<br>C07F7/18 |
| X | CN 111 363 372 A (WAHGON SHENGAOO WATERPROOF MAT CO LTD) 3 July 2020 (2020-07-03)<br>* claims; examples * | 1-5 | |
| X | KR 101 183 909 B1 (AR & C CO LTD [KR]) 21 September 2012 (2012-09-21)<br>* paragraph [0046]; claims; examples * | 9 | |
| X | US 2019/048031 A1 (RUDEK MARKUS [DE] ET AL) 14 February 2019 (2019-02-14)<br>* claims; examples * | 1-4 | |
| X | CN 109 206 928 B (WANG QINGMIN) 18 June 2021 (2021-06-18)<br>* claims; examples * | 1-5 | TECHNICAL FIELDS SEARCHED (IPC) |
| X | CN 105 802 265 B (NANJING ROAD KEEPER TECH CO LTD) 23 April 2019 (2019-04-23)<br>* claims; examples * | 1-5 | C08K<br>C08L<br>C07F |
| T | Anonymous: "3-Glycidoxypropyltrimethoxysilan, C9H20O5Si", , 1 January 2024 (2024-01-01), pages 1-3, XP093221283, Retrieved from the Internet: URL:http://www.silanecouplingagent.com/de/kh-560-cas-2530-83-8-products.html [retrieved on 2024-11-08] | | |

The present search report has been drawn up for all claims

1

| Place of search | Date of completion of the search | Examiner |
|---|---|---|
| Munich | 11 November 2024 | Masson, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 17 8133

This annex lists the patent family members relating to the patent documents cited in the above-mentioned European search report. The members are as contained in the European Patent Office EDP file on
The European Patent Office is in no way liable for these particulars which are merely given for the purpose of information.

11-11-2024

| Patent document cited in search report | | Publication date | Patent family member(s) | | Publication date |
|---|---|---|---|---|---|
| CN 114479486 | B | 04-07-2023 | NONE | | |
| CN 111363372 | A | 03-07-2020 | NONE | | |
| KR 101183909 | B1 | 21-09-2012 | NONE | | |
| US 2019048031 | A1 | 14-02-2019 | CN 109384808 | A | 26-02-2019 |
| | | | EP 3441397 | A1 | 13-02-2019 |
| | | | JP 7171301 | B2 | 15-11-2022 |
| | | | JP 2019031492 | A | 28-02-2019 |
| | | | US 2019048031 | A1 | 14-02-2019 |
| CN 109206928 | B | 18-06-2021 | NONE | | |
| CN 105802265 | B | 23-04-2019 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2985678 A
- US 5130354 A
- US 4170484 A
- US 4038096 A
- US 8771413 B2